# EUROPEAN PATENT APPLICATION

(11) **EP 4 099 188 A1**
(43) Date of publication of application: **07.12.2022**
(21) Application number: 22173967.5
(22) Date of filing: 18.05.2022
(51) Int. Cl.: G06F 16/906

(54) **INCLUSIVE HOLIDAYS**

(30) Priority: 01.06.2021 US 202163195588 P; 12.04.2022 US 202217658961
(71) Applicant: Apple Inc., Cupertino, CA 95014 (US)
(72) Inventor: REKIK, Sabrine, Cupertino, CA, 95014 (US); ROCKWELL, Alexa, Cupertino, CA, 95014 (US); CHANDRA, Rohan, Cupertino, CA, 95014 (US); GOPALAN, Sowmya, Cupertino, CA, 95014 (US); CLARK, Emma D., Cupertino, CA, 95014 (US); BESSIERE, Kevin, Cupertino, CA, 95014 (US)
(74) Representative: Lang, Johannes

(57) **Abstract**

Techniques for digital asset classification are described. One or more holiday score are assigned to a set of digital media assets. The one or more holiday scores are calculated based on weighted holiday metrics determined based on characteristics of the set of digital assets. A holiday classification is assigned based on the one or more holiday score, and the set of digital media assets are provided for presentation in accordance with the holiday classification.

## Description

### TECHNICAL FIELD

Embodiments described herein relate to digital asset management (also referred to as DAM). More particularly, embodiments described herein relate to organizing, storing, describing, and/or retrieving digital assets (also referred to herein as "DAs"), such that they may be presented to a user of a computing system in the form of holidays, e.g., based on contextual analysis.

### BACKGROUND

Modern consumer electronics have enabled users to create, purchase, and amass considerable amounts of digital assets, or "DAs." For example, a computing system (e.g., a smartphone, a stationary computer system, a portable computer system, a media player, a tablet computer system, a wearable computer system or device, etc.) can store or have access to a collection of digital assets (also referred to as a DA collection) that includes hundreds or thousands of DAs (e.g., images, videos, music, etc.).

Managing a DA collection can be a resource-intensive exercise for users. For example, retrieving multiple DAs representing an important moment or event in a user's life from a sizable DA collection can require the user to sift through many irrelevant DAs. This process can be arduous and unpleasant for many users. A digital asset management (DAM) system can assist with managing a DA collection. A DAM system represents an intertwined system incorporating software, hardware, and/or other services in order to manage, store, ingest, organize, and retrieve DAs in a DA collection. An important building block for at least one commonly available DAM system is a database. Databases comprise data collections that are organized as schemas, tables, queries, reports, views, and other objects. Exemplary databases include relational databases (e.g., tabular databases, etc.), distributed databases that can be dispersed or replicated among different points in a network, and object-oriented programming databases that can be congruent with the data defined in object classes and subclasses.

However, one problem associated with using databases for digital asset management is that the DAM system can become resource-intensive to store, manage, and update. That is, substantial computational resources may be needed to manage the DAs in the DA collection (e.g., processing power for performing queries or transactions, storage memory space for storing the necessary databases, etc.). Another related problem associated with using databases is that DAM cannot easily be implemented on a computing system with limited storage capacity without managing the assets directly (e.g., a portable or personal computing system, such as a smartphone or a wearable device). Consequently, a DAM system's functionality is generally provided by a remote device (e.g., an external data store, an external server, etc.), where copies of the DAs are stored, and the results are transmitted back to the computing system having limited storage capacity.

Thus, according to some DAM embodiments, a DAM may further comprise a knowledge graph metadata network (also referred to herein as simply a "knowledge graph" or "metadata network") associated with a collection of digital assets (i.e., a DA collection). The metadata network can comprise correlated metadata assets describing characteristics associated with digital assets in the DA collection. Each metadata asset can describe a characteristic associated with one or more digital assets (DAs) in the DA collection. For example, a metadata asset can describe a characteristic associated with multiple DAs in the DA collection, such as the location, day of week, event type, etc., of the one or more associated DAs. Each metadata asset can be represented as a node in the metadata network. A metadata asset can be correlated with at least one other metadata asset. Each correlation between metadata assets can be represented as an edge in the metadata network that is between the nodes representing the correlated metadata assets. According to some embodiments, the metadata networks may define multiple types of nodes and edges, e.g., each with their own properties, based on the needs of a given implementation.

In addition to the aforementioned difficulties that a user may face in managing a large DA collection (e.g., locating and/or retrieving multiple DAs representing an important moment or event in a user's life), users may also struggle to determine (or be unable to spend the time it would take to determine) which DAs correspond to various important moments in their life, e.g., the celebration of holidays, particularly when those DAs contain content related to holidays that are not commonly celebrated in a location that the user of a DAM resides in. Thus, there is a need for methods, apparatuses, computer readable media, and systems to provide users with more intelligent and automated DA classification for holidays that is more aware and inclusive of the various holidays celebrated around the world-and robust to the different manners (and different locations) in which particular users may celebrate such holidays.

### BRIEF DESCRIPTION OF THE DRAWINGS

Embodiments described herein are illustrated by examples and not limitations in the accompanying drawings, in which like references indicate similar features. Furthermore, in the drawings, some conventional details have been omitted, so as not to obscure the inventive concepts described herein.
FIG. **1** illustrates, in block diagram form, an asset management system that includes electronic components for classifying digital assets (DAs), according to one or more embodiments.
FIG. **2** illustrates a flowchart diagram of a technique for classifying DAs, in accordance with one or more embodiments.
FIG. **3** illustrates, in flow diagram form, a technique for holiday classification of digital assets, in accordance with one or more embodiments.
FIG. **4** illustrates, in block diagram form, an exemplary digital asset holiday classification, in accordance with one or more embodiments.
FIG. **5** illustrates, in flowchart form, a technique for selecting holiday audio media for a classified set of digital assets, in accordance with one or more embodiments.
FIGS. **6A-6B** illustrate exemplary user interfaces illustrating the presentation of classified digital assets, in accordance with one or more embodiment.
FIG. **7** illustrates a simplified functional block diagram of an illustrative programmable electronic device for performing DA classification, in accordance with an embodiment.

### DETAILED DESCRIPTION

This disclosure pertains to systems, methods, and computer readable media for classifying digital media assets based on holidays. One or more holiday score are assigned to a set of digital media assets. The set of digital media assets may be one or multiple sets of digital media assets, which may be pre-grouped digital media assets, for example based on a common time frame and/or location. The one or more holiday scores are calculated based on weighted holiday metrics determined based on characteristics of the set of digital assets. The holiday scores may be determined, for example, based on the entire set of digital assets, and/or for one or more individual assets in the set. A holiday classification is assigned based on the one or more holiday score, and the set of digital media assets are provided for presentation in accordance with the holiday classification.

In one or more embodiments, the weighted holiday metrics may include such parameters as a date score, a location score, and a content score to determine how likely an asset or a set of assets capture a particular holiday. Scores may be determined for one or more holidays, and a classification may be determined based on the one or more associated scores.

In some embodiments, the classified assets may be provided for presentation to a user at a user device, e.g., in the form of an automatically generated multimedia presentation. The classified assets may be presented with a representative digital media asset, which may be selected from the set, for example based on a particular metric or score for the representative media asset among the set. In one or more embodiments, a representative audio media item may also be selected for presentation with the classified set of media assets, e.g., in the form of a soundtrack for an automatically generated multimedia presentation containing DAs determined to be related to a particular holiday.

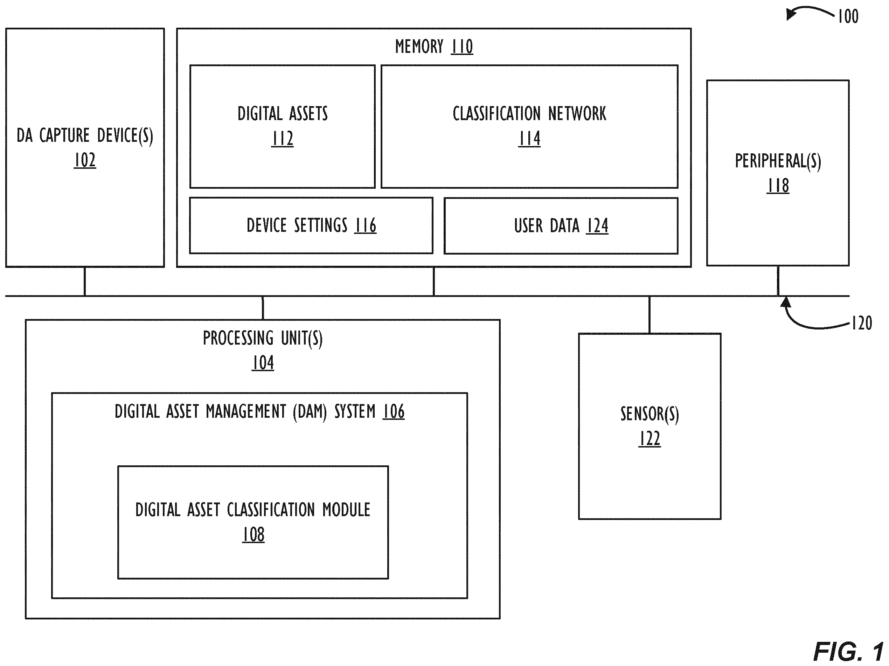

FIG. **1** illustrates, in block diagram form, a processing system **100** that includes electronic components for performing digital asset management (DAM), in accordance with one or more embodiments described in this disclosure. The system **100** can be housed in single computing system, such as a desktop computer system, a laptop computer system, a tablet computer system, a server computer system, a mobile phone, a media player, a personal digital assistant (PDA), a personal communicator, a gaming device, a network router or hub, a wireless access point (AP) or repeater, a set-top box, or a combination thereof. Components in the system **100** can be spatially separated and implemented on separate computing systems that are connected by the communication technology, as described in further detail below.

For one embodiment, the system **100** may include processing unit(s) **104,** memory **110,** DA capture device(s) **102**, sensor(s) **122**, and peripheral(s) **118**. For one embodiment, one or more components in the system **100** may be implemented as one or more integrated circuits (ICs). For example, at least one of the processing unit(s) **104,** the communication technology **120,** the DA capture device **102**, the peripheral(s) **118,** the sensor(s) **122**, or the memory **110** can be implemented as a system-on-a-chip (SoC) IC, a three-dimensional (3D) IC, any other known IC, or any known IC combination. For another embodiment, two or more components in the system **100** are implemented together as one or more ICs. For example, at least two of the processing unit(s) **104,** the communication technology **120,** the DA capture device(s) **102**, the peripheral(s) **118,** the sensor(s) **122**, or the memory **110** are implemented together as an SoC IC. Each component of system **100** is described below.

As shown in FIG. **1**, the system **100** can include processing unit(s) **104,** such as CPUs, GPUs, other integrated circuits (ICs), memory, and/or other electronic circuitry. For one embodiment, the processing unit(s) **104** manipulate and/or process data associated with digital assets **112** or other data such as user data **116**. In addition, the processing units **104** may manipulate and/or process data associated with the digital assets based on device settings **116**, such as a device location, calendar settings, keyboard settings, and the like. The processing unit(s) **104** may include a digital asset management (DAM) system **106** for performing one or more embodiments of DAM, as described herein. For example, in one or more embodiments, the DAM system **106** may include a digital asset classification module **108**, which may determine a holiday classification for one or more digital assets **112**. In one or more embodiments, the digital asset management system **106** is implemented as hardware (e.g., electronic circuitry associated with the processing unit(s) **104,** circuitry, dedicated logic, etc.), software (e.g., one or more instructions associated with a computer program executed by the processing unit(s) **104,** software run on a general-purpose computer system or a dedicated machine, etc.), or a combination thereof.

The DAM system **106** can obtain or receive a DA collection. As used herein, a "digital asset," a "DA," and their variations refer to media data that can be stored in or as a digital form (e.g., a digital file etc.). This digitalized data includes, but is not limited to, the following: image media (e.g., a still or animated image, etc.); audio media (e.g., a song, etc.); and video media (e.g., a movie, etc.). The examples of digitalized data above can be combined to form multimedia (e.g., a computer animated cartoon, a video game, etc.). A single DA refers to a single instance of digitalized data (e.g., an image, a song, a movie, etc.). Multiple DAs or a group of DAs refers to multiple instances of digitalized data (e.g., multiple images, multiple songs, multiple movies, etc.).

As used herein, a "set of digital assets," a collection of DAs," a "DA collection," and their variations refer to multiple DAs that may be stored in one or more storage locations. The one or more storage locations may be spatially or logically separated as is known.

As used herein, "context" and its variations refer to any or all attributes of a user's device that includes or has access to a DA collection associated with the user, such as physical, logical, social, and other contextual information. As used herein, "contextual information" and its variations refer to metadata that describes or defines a user's context or a context of a user's device that includes or has access to a DA collection associated with the user. Exemplary contextual information includes, but is not limited to, the following: a predetermined time interval; an event scheduled to occur in a predetermined time interval; a geolocation visited during a particular time interval; one or more identified persons associated with a particular time interval; an event taking place during a particular time interval, or a geolocation visited during a particular time interval; weather metadata describing weather associated with a particular period in time (e.g., rain, snow, sun, temperature, etc.); season metadata describing a season associated with the capture of one or more DAs; relationship information describing the nature of the social relationship between a user and one or more third parties; or natural language processing (NLP) information describing the nature and/or content of an interaction between a user and one more third parties. For some embodiments, the contextual information can be obtained from external sources, e.g., a social networking application, a weather application, a calendar application, an address book application, any other type of application, or from any type of data store accessible via a wired or wireless network (e.g., the Internet, a private intranet, etc.).

As used herein, an "moment" and its variations refer to a situation or an activity occurring at one or more locations during a specific time interval. Moments may be organized as sets of DAs in a given user's DA collection. According to one or more embodiments, a holiday may be captured in one or more moments. A "holiday" may be a predetermined recognized event generally associated with a date (or range of dates), iconic imagery, or the like. A set of DAs classified as corresponding to a "holiday" may be presented, for example, in the form of a multimedia presentation.

The system **100** can also include memory **110** for storing and/or retrieving digital assets **112,** the device settings **116**, user data **124** and the like. The memory **110** may also include a classification network **114** which may be a trained model configured to detect digital media content such as iconic imagery representative of one or more holidays, among the digital assets **112.**

The system **100** can include a DA capture device **102** (e.g., an imaging device for capturing images, an audio device for capturing sounds, a multimedia device for capturing audio and video, any other known DA capture device, etc.). For one embodiment, the DA capture device **102** can also include a signal processing pipeline that is implemented as hardware, software, or a combination thereof. The signal processing pipeline can perform one or more operations on data received from one or more components in the device **102.** The signal processing pipeline can also provide processed data to the memory **110,** the peripheral(s) **118** (as discussed further below), and/or the processing unit(s) **104**.

The system **100** can also include peripheral(s) **118**. For one embodiment, the peripheral(s) **118** can include at least one of the following: (i) one or more input devices that interact with or send data to one or more components in the system **100** (e.g., mouse, keyboards, etc.); (ii) one or more output devices that provide output from one or more components in the system **100** (e.g., monitors, printers, display devices, etc.); or (iii) one or more storage devices that store data in addition to the memory **110.** Peripheral(s) **118** is illustrated with a dashed box to show that it is an optional component of the system **100**. The peripheral(s) **118** may also refer to a single component or device that can be used both as an input and output device (e.g., a touch screen, etc.). The system **100** may include at least one peripheral control circuit (not shown) for the peripheral(s) **118**. The peripheral control circuit can be a controller (e.g., a chip, an expansion card, or a stand-alone device, etc.) that interfaces with and is used to direct operation(s) performed by the peripheral(s) **118**. The peripheral(s) controller can be a separate processing unit or integrated in processing unit(s) **104**. The peripheral(s) **118** can also be referred to as input/output (I/O) devices **118** throughout this document.

The system **100** can also include one or more sensors **122**. For one embodiment, the sensor(s) **122** can detect a characteristic of one or more environs. Examples of a sensor include, but are not limited to: a light sensor, an imaging sensor, an accelerometer, a sound sensor, a barometric sensor, a proximity sensor, a vibration sensor, a gyroscopic sensor, a compass, a barometer, a heat sensor, a rotation sensor, a velocity sensor, and an inclinometer.

For one embodiment, the system **100** includes communication mechanism **120**. The communication mechanism **120** can be, e.g., a bus, a network, or a switch. When the technology **120** is a bus, the technology **120** is a communication system that transfers data between components in system **100,** or between components in system **100** and other components associated with other systems (not shown). As a bus, the technology **120** includes all related hardware components (wire, optical fiber, etc.) and/or software, including communication protocols. For one embodiment, the technology **120** can include an internal bus and/or an external bus. Moreover, the technology **120** can include a control bus, an address bus, and/or a data bus for communications associated with the system **100**. For one embodiment, the technology **120** can be a network or a switch. As a network, the technology **120** may be any network such as a local area network (LAN), a wide area network (WAN) such as the Internet, a fiber network, a storage network, or a combination thereof, wired or wireless. When the technology **120** is a network, the components in the system **100** do not have to be physically co-located. When the technology **110** is a switch (e.g., a "cross-bar" switch), separate components in system **100** may be linked directly over a network even though these components may not be physically located next to each other. For example, two or more of the processing unit(s) **104,** the communication technology **120,** the memory **110,** the peripheral(s) **118,** the sensor(s) **122**, and the DA capture device **102** are in distinct physical locations from each other and are communicatively coupled via the communication technology **120,** which is a network or a switch that directly links these components over a network.

In one or mor embodiments, the digital asset classification module **108** may access a collection of DAs, and calculate, for the collection, one or more holiday scores. The holiday scores may be determine based on weighted metrics associated with the DAs and in relation to one or more holidays. Examples of weighted metrics may include a location, a time the DA was captured, DA content, and the like. In one or more embodiments, classification network **114** may be utilized to determine whether a particular DA or collection of DAs includes imagery related to one or mor predetermined holidays. A holiday classification may be assigned to the collection of DAs based on the holiday scores, and the collection of DAs may be provided for presentation to a user in association with the classification.

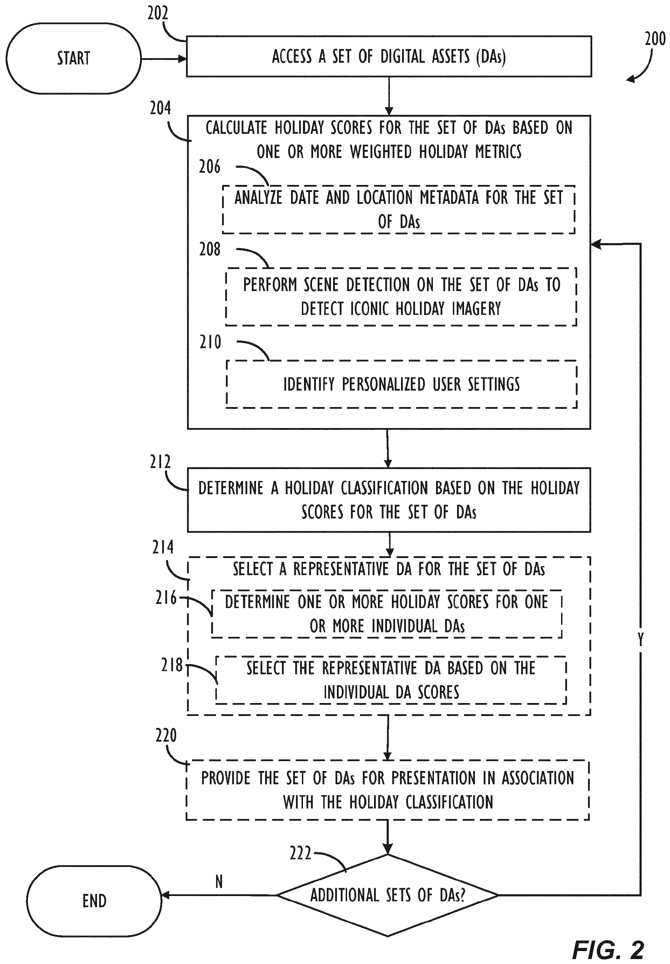

FIG. **2** shows, in flowchart form, an overview of a method **200** for determining a holiday classification for a set of DAs, according to one or more embodiments. Although the various actions are depicted in a particular order, in some embodiments the various actions may be performed in a different order. In still other embodiments, two or more of the actions may occur simultaneously. According to yet other embodiments, some of the actions may not be required or other actions maybe included. For purposes of clarity, the flowchart will be described with respect to the various components of FIG. **1**. However, it should be understood that the various actions may be taken by alternative components, according to one or more embodiments.

The flowchart begins at block **202** where a digital asset classification module access a set of digital assets. The set of digital assets may include one or more digital media assets. In one or more embodiments, the set of digital assets may be pre-grouped into the set, for example, based on a common timeframe, location, event, setting, and the like. The set of digital assets may be accessed, for example, from local storage or remote storage.

The flowchart continues at block **204** where the digital asset classification module **108** calculates one or more holiday scores for the set of DAs based on one or more weighted holiday metrics. According to tone or more embodiments, the holiday scores may be calculated for one or more holidays selected from a preexisting group of holidays. The holiday scores may be calculated for the set of DAs as a whole, individually, or a combination of both. That is, in one or more embodiments, the holiday scores may be calculated based on metrics for the entire set, or based on an average score based on metrics of individual DAs, or the like.

The holiday scores may be calculated in a variety of ways. According to one or more embodiments, as shown at block **206**, the digital asset classification module **108** may analyze metadata for the collection of DAs, such as date, location, and the like. In one or more embodiments, the date and location metadata may be associated with individual DAs, the collection of DAs, and the like. One or more of the holidays for which holiday scores are calculated maybe associated with dates or date ranges. For example, US Independence Day may be strongly associated with July 4, whereas Easter may be generally associated with dates in Spring, or may be strongly associated with particular dates in a particular year. Accordingly, the holiday score may be based, in part, on a date score, which may be a weighted score (indicating how strong the date of the DA capture is associated with a particular holiday), a binary score (indicating whether the date of the DA capture is associated with the particular holiday), or the like. In one or more embodiments, the date associated with a particular holiday may be a single date on which the holiday is celebrated, or a date range during which the holiday is typically celebrated. Further, in one or more embodiments, a holiday may be celebrated at different times in different geographic locations, or by different cultures. For example, Easter and Orthodox Easter may likely be associated with different dates based on whether the user resides in or is located in a particular region.

Similarly, one or more of the holidays for which the holiday scores are calculated may be associated with certain locations and/or location settings. The locations may include, for example, where the DAs were captured. Additionally, or alternatively, the locations may include a residence, region setting, or other setting of a user. The location score may be determined based on how strongly linked the location and/or settings are with a particular holiday. For example, Lunar New Year may be strongly linked to countries such as China, but less strongly linked to countries such as Argentina. By contrast, Purim may be strongly associated with Israel. Accordingly, the holiday score may be based, in part, on a location score, which maybe a weighted score (indicating how strong the location of the DA and/or location settings of the device is associated with a particular holiday), a binary score (indicating whether the location of the DA capture is associated with the particular holiday), or the like. Accordingly, in some embodiments, the date score may vary or be weighted differently across regions, geographic locations, or a user's home setting. As an example, a Russian tourist may be visiting New York on July 4 and capture images of fireworks. However, based on the tourist's settings of Russia as the home region of the device and/or user,

Calculating the holiday score at **204** also optionally includes performing scene detection on the set of DAs to detect iconic imagery or other identifiers for the holidays for which the scores are being calculated. In one or more embodiments, the scene detection may include performing image recognition among the set of visual DAs to detect visual cues for one or more of the holidays. In one or more embodiments, the DAs in the set of DAs may be applied to a classification network to identify the presence of iconic imagery for various holidays among the DAs. In one or more embodiments, the scene detection technique may provide a score for each of the one or more holidays based on the content detected among the DAs.

Calculating the holiday score at **204** may also optionally include applying personalized information at block **210**. In one or more embodiments, the personalized information may include, for example, system or device settings that may indicate a tendency toward certain holidays. For example, if a user's device has an Islamic calendar activated, then that user is more likely aligned with Eid than a user with a Chinese calendar. Similarly, if a user has enabled a Spanish language keyboard, that user is more likely to be associated with Día de los Muertos than a user who has enabled a Japanese keyboard. Further, in one or more embodiments, the user settings may include user-specified holidays to be considered or excluded.

The flowchart continues at block **212** where the digital asset classification module **108** determines a holiday classification based on the holiday scores for the set of DAs. In some embodiments, the holiday classification may be based on a highest score among the set of holiday scores. For example, the set of DAs may be processed for determination of holiday scores for 12 different holidays, and the classification may be selected as the holiday with the highest score. Additionally, or alternatively, the holiday classification may require that the holiday score that is the highest holiday score satisfies a predetermined threshold score to reduce false positive classifications.

At **214,** the flowchart includes selecting a representative DA from the set of DAs. The representative DA may be, for example, a visual digital media asset which is representative of the set of DAs based on the holiday classification from bock **212.** The representative DA may be selected in a number of ways. For example, at block **215,** holiday scores may be determined for one or more individual DA of the set of DAs. In some embodiments, a holiday score may be determined for the individual DA for only the holiday determined by the holiday classification at **212.** Alternatively, multiple holiday scores may be determined for an individual DA in order to identify a DA for which the holiday score for the holiday classification is the greatest outlier among the holiday scores (e.g., the least likely to be confused for another holiday). Then, at **218,** the representative DA may be selected based on the individual DA scores. For example, if the set of DAs is classified as Mother's Day, then the representative DA may be selected as the DA in the set of DAs that is associated with the highest score. In one or more embodiments, a subset of DAs may be individually scored to determine a representative DA. In some embodiments, certain factors of the score may be considered or weighted for selecting the representative DA. Additionally, or alternatively, other factors may be considered for selecting a representative DA, such as image quality and the like.

The flowchart also optionally includes, at block **220**, providing the set of DAs for presentation in association with the holiday classification. In one or more embodiments, the DAs may be provided for presentation by a particular application, such as a photos application. The set of DAs may be provided for presentation to a local device or to a remote device. Further, the DAs may be provided for presentation in association with the representative DA, such that the representative DA is utilized as an album cover for an album comprising the set of DAs. At block **222**, a determination is made regarding whether there are any additional sets of DAs to be processed. If so, the flowchart returns to **202** until the sets of DAs are all processed. One the sets of DAs are all processed, the flowchart ends.

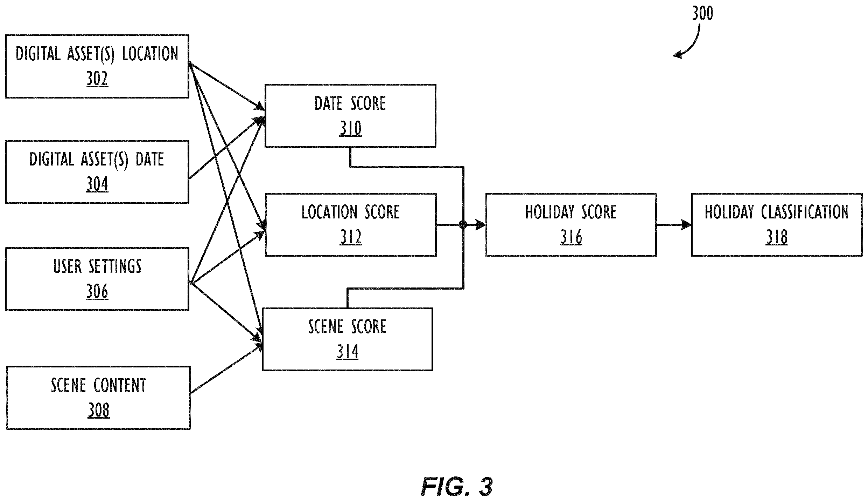

FIG. **3** illustrates, in block diagram form, an exemplary classification flow **300**, in accordance with one embodiment. The exemplary classification flow **300** illustrated in FIG. **3** can be generated and/or used by the DAM system illustrated in FIG. **1**. It is to be appreciated that the classification flow **300** described and shown in FIG **3** is exemplary, and that additional or alternative techniques or modules may be used by the DAM in classifying DAs.

Initially, a digital asset classification module may obtain, for a set of DAs, digital asset locations **302**, digital asset date **304**, user settings **306**, and scene content **308**. In one or more embodiments, the digital asset location **302** may refer to a location at which one or more of the digital media assets were captured. The digital asset location may refer to a geographic location, such as a city, a country, and the like. The digital asset date **304** may refer to a date on which one or more of the digital assets in a set of digital assets are captured. The digital asset date **304** may refer to a timeframe, a single date, a set of dates, or the like. The user settings **306** may refer to user settings of a device or application which may provide context for determining holidays celebrated by the user. For example, the user settings may include active calendars, calendar entries, keyboard settings, language settings, and the like. Further, in some embodiments, the user settings **306** may include user settings which specifically affect holidays for which holiday scores are calculated, such as user input to ignore certain holidays, consider certain holidays, and the like. Scene content **308** may include detected imagery in visual digital assets that represent holidays. In some embodiments, scene content **308** may be determined by performing a scene detection of one or more DAs in a set of DAs to identify the presence of iconic holiday imagery for various holidays for which holiday scores are to be determined.

The flow continues by calculating a date score **310**, a location score **312**, and a scene score **314**. According to one or more embodiments, the date score **310**, location score **312**, and scene score **314** may be determined for each of a set of predetermined holidays. As shown, the date score **310** may take into consideration the digital asset(s) location **302**, digital asset(s) date **304**, and user settings **306**. For example, a particular holiday may be associated with a particular date for a particular location, and the like. Further, user settings **306** (e.g., user device region settings, user device keyboard settings, user device language settings, personalized preferred language settings, user calendar settings, personalized user holiday celebration preferences, etc.) may be considered for determinations of holidays for which date scores **310** should be determined, and/or how date scores **310** should be determined. For example, a Chinese tourist capturing images of oranges and red envelopes in Argentina may have a stronger score than a local Argentine user. Location score **312** is determined based on the digital asset(s) location **302**, and user settings **306**. For example, the location score may determine how likely a particular holiday is to be celebrated in a particular location, and/or by users likely to be based in (or native to) the particular location (regardless of where in the world the actual DAs related to the user's celebration of the particular holiday were actually captured). Scene score **314** may be determined based on digital asset(s) location **302**, user settings **306**, and scene content **308**. For example, the imagery that may be related to particular holidays may vary from one location to another, or based on how a particular user celebrates the holiday.

The flow diagram continues at **316** where a holiday score is determined. The holiday score may be determined for each of a plurality of holidays. The holiday score may consider each of the data score **310**, location score **312**, and scene score **314** for each holiday. In some embodiments, the date score **310**, location score **312**, and scene score **314** may be weighted to determine the holiday score **316** according to one or more embodiments. For example, some holidays are more closely linked to a particular date than others. As an example, Thanksgiving may be celebrated in the United States on a particular day, and is unlikely to be celebrated outside of that weekend. By contrast, Christmas celebrations are often celebrated throughout December. Said another way, the date score for a set of DAs potentially related to a Christmas Day holiday celebration may drop off less sharply as the absolute difference in the number of days between the capture date of the set of DAs and the date of Christmas Day increases (e.g., a date score of 1.0 for DAs +/- 2 days of Christmas Day, a date score of 0.75 for DAs +/- 5 days of Christmas Day, a date score of 0.25 for DAs +/- 10 days of Christmas Day, and a date score of 0.0 for DAs greater than +/- 10 days of Christmas Day). By contrast, the date score for a set of DAs potentially related to a Thanksgiving Day holiday celebration may drop off very sharply as the absolute difference in the number of days between the DA capture date and the date of Thanksgiving Day increases (e.g., a date score of 1.0 for DAs +/- 2 days of Thanksgiving Day, and a date score of 0.0 for DAs greater than +/- 2 days of Thanksgiving Day).

The flow diagram concludes at **318** where the holiday classification is determined. In some embodiments, one of the predetermined holidays for which holiday scores are calculated may be selected as the holiday classification, or no holiday may be selected for holiday classification. In some embodiments, the holiday for which the highest holiday score is calculated may be selected for the holiday classification. In some embodiments, the holiday score must satisfy a predetermined holiday score threshold in order to be used for holiday classification.

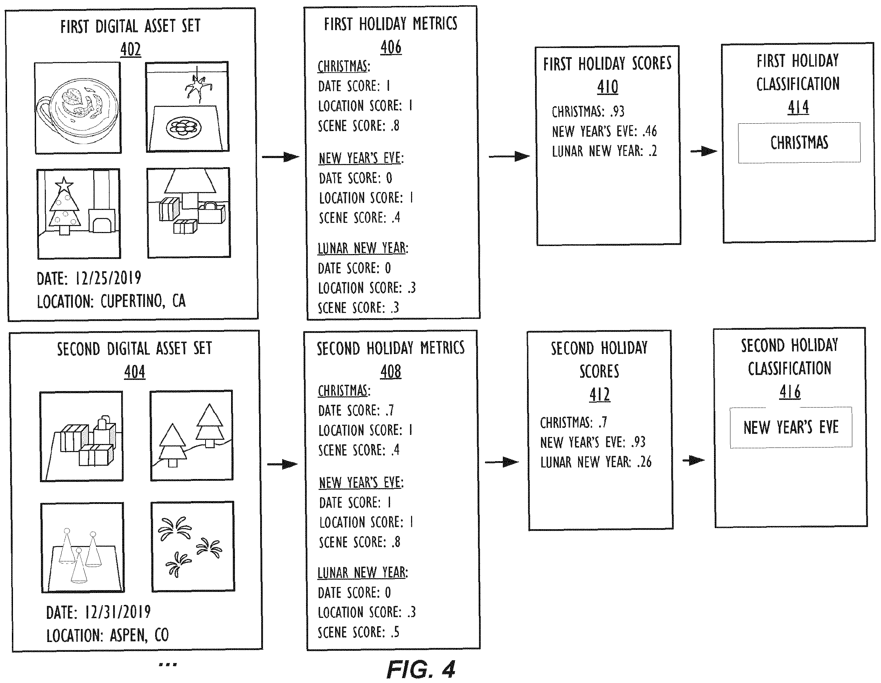

FIG. **4** illustrates, in block diagram form, an exemplary digital asset holiday classification, in accordance with one or more embodiments. The exemplary classification flow **400** illustrated in FIG. **4** can be generated and/or used by the DAM system illustrated in FIG. **1**. It is to be appreciated that the classification flow **400** described and shown in FIG **4** is exemplary, and that additional or alternative techniques or modules may be used by the DAM in classifying DAs.

The exemplary flow diagram **400** begins with a first digital asset set **402** and a second digital asset set **404**. As shown, the first digital asset set **402** includes four images captured on December 25, 2019 in Cupertino, CA. Some of the digital assets include imagery associated with Christmas, such as a tree and gifts, whereas others include ambiguous or unrelated imagery, such as a cup of coffee. The second digital asset set **404** includes four images captured on December 31,2019 in Aspen, CO. Some of the digital assets include imagery associated with New Year's Eve, such has fireworks and party hats. Other images include unrelated or ambiguous imagery, such as pine trees and gifts.

In one or more embodiments, each of the sets of assets may be processed for determination of holiday metrics. The holiday metrics may include scores or other parameters related to how likely the set of digital assets captures one or more holidays. As shown, the first holiday metrics **406** may include various scores or other parameters for each of a set of holidays. In the example shown, holiday metrics **406** for the first digital asset set **402** includes, for each of Christmas, New Year's Eve, and Lunar New Year, a date score, location score, and scene score. For the first holiday, Christmas, the first digital asset set **402** is assigned a date score of 1, a location score of 1, and a scene score of .8. In one or more embodiments, the high date score and location score may be based on the fact that Christmas is most frequently celebrated by US-based users on December 25, and Christmas is a holiday that is typically celebrated in Cupertino, CA. The scene score maybe determined based on the content of the scenes within the first digital asset set **402**. For example, the Christmas tree, gifts, and cookies may be recognized as iconic imagery for Christmas. By contrast, New Year's Eve has a date score of 0 because New Year's Eve is not typically celebrated by US-based users on December 25, but a location score of 1 because New Year's Eve is a holiday that is typically celebrated in Cupertino, CA and by US-based users. However, the content of the scenes may result in a scene score of .4. Similarly, for Lunar New Year, the date score is 0 because December 25 is not associated with Lunar New Year for US-based users. The location score is .3 because Lunar New Year is somewhat typically celebrated in Cupertino, CA by US-based users (and, e.g., the user in this example possesses no other personal user settings indicative of high likelihood that they would be celebrating Lunar New Year while located in the US, such as a Chinese-language or Vietnamese-language keyboard being installed on their device). The scene score is .3 based on the content of the first digital asset set.

Turning to the second digital asset set **404,** holiday metrics **408** for the second digital asset set **404** includes, for each of Christmas, New Year's Eve, and Lunar New Year, a date score, location score, and scene score. For the first holiday, Christmas, the second digital asset set **404** is assigned a date score of .7, a location score of 1, and a scene score of .4. In one or more embodiments, the date scores for the second digital asset set **404** may be somewhat high for both Christmas and New Year's Eve because New Year's Eve is typically celebrated on December 31^{st} (i.e., the actual date associated with the second digital asset set **404**), and Christmas is often celebrated throughout the entire month of December, which may include December 31^{st}. The location scores for the second digital asset set **404** for both Christmas and New Year's Eve may be given a score of 1 because both Christmas and New Year's Eve holidays are typically celebrated in Cupertino, CA and by US-based users. The scene score for a given holiday may be determined based on the content of the scenes within the second digital asset set **404**. For example, the pine trees and gifts may be recognized as iconic imagery for Christmas, whereas the fireworks and party hats are not, resulting in a scene score of .4. However, the content of the same scenes in the second digital asset set **404** may result in a New Year's Eve scene score of .8, for example, because of the fireworks and party hats are so strongly associated with the holiday of New Year's Eve. For Lunar New Year, the date score is 0 because December 31 is not associated with the celebration of 2019 Lunar New Year anywhere in the world. The location score is .3 because Lunar New Year is somewhat celebrated in Cupertino, CA and by US-based users, and the scene score is .5 based on the content of the second digital asset set **404** being only somewhat related to Lunar New Year celebrations (e.g., the fireworks and gifts).

Turning to the holiday scores, the first holiday scores **410** may be determined based on the first holiday metrics **406** for the first digital asset set **402**. In one or more embodiments, the holiday score for each holiday may be based on weights assigned to different metrics in the first holiday metrics **406**. In this example, first holiday scores **410** may be calculated as .**93** for Christmas, .46 for New Year's Eve, and .2 for Lunar New Year. Similarly, the second holiday scores **412** may be determined based on the second holiday metrics **408** for the second digital asset set **404**. In one or more embodiments, the holiday score for each holiday may be based on weights assigned to different metrics in the first holiday metrics **408**. In this example, second holiday scores **412** maybe calculated as .7 for Christmas, .93 for New Year's Eve, and .26 for Lunar New Year. As described above, a holiday classification is determined for each set of digital assets. In some embodiments, the different score components could be weighted differently for different holidays. For example, the location score maybe most important of the 3 sub-scores to classifying Purim, but the scene score may be the most important of the 3 sub-scores to classifying Christmas. Accordingly, the first holiday classification **414** may be Christmas, whereas the second holiday classification **416** may be New Year's Eve. In one or more embodiments, the holiday classification may be based on selecting the highest of the calculated holiday scores. Additionally, in some embodiments, the holiday score must satisfy a predetermined holiday score threshold to be used for selecting the first holiday classification.

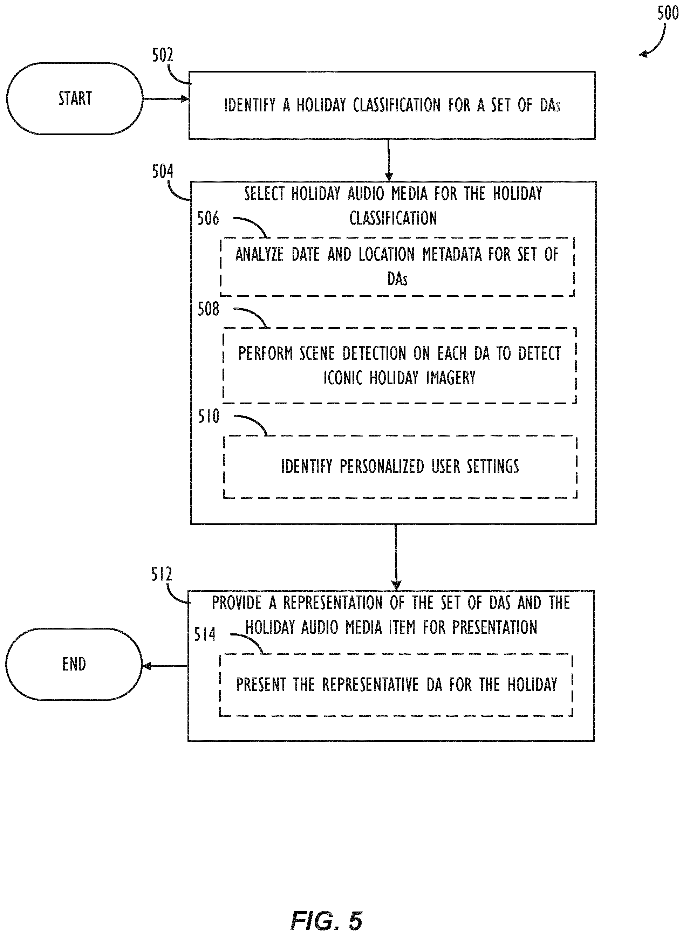

FIG. **5** illustrates, in flowchart form, a technique for selecting holiday audio media for a classified set of digital assets, in accordance with one or more embodiments. In some embodiments, audio media may be presented in association with a DA or set of DAs included in a multimedia presentation, e.g., in the form of a soundtrack that is played back during the multimedia presentation, wherein the selection of the audio media item is made in accordance with the selected holiday classification. Although the various actions are depicted in a particular order, in some embodiments the various actions may be performed in a different order. In still other embodiments, two or more of the actions may occur simultaneously. According to yet other embodiments, some of the actions may not be required or other actions may be included. For purposes of clarity, the flowchart will be described with respect to the various components of FIG. **1****.**

The flowchart begins at **502**, by identifying a holiday classification for a set of DAs. The holiday classification may be determined as described by the various embodiments detailed above. At block **504**, the digital asset classification module **108** selects holiday audio media for the holiday classification. The holiday audio media item may include, for example, a song, a playlist, a sound scape, an audio file, or the like. The holiday audio media may be selected in a number of ways. As shown, optionally at **506**, the digital asset classification module **506** may analyze the date and location metadata for the set of DAs. That is, date and location information may be utilized to select the audio media according to one or more embodiments. For example, holiday audio for a particular year may be selected, holiday audio that is popular in the particular location (and/or at the particular date) may be selected, and/or curated holiday audio identified as being appropriate for the celebration of a particular holiday at a particular location (and/or at the particular date) may be selected. Optionally, as shown in block **508**, the digital asset classification module **108** may perform scene detection on one or more DAs to detect iconic holiday imagery which may be used for selecting the holiday audio. For example, a set of photos related to Christmas may include religious imagery and the holiday audio selected may be similarly religious, whereas another set of DAs that is classified as Christmas may include more agnostic imagery, and non-religious audio media may be selected. Further, optionally at **510**, personalized user settings may be identified and utilized for selecting the holiday audio data. For example, a user's music tastes may be considered. As another example, if a keyboard for a particular language is enabled, then audio media in that language may be selected. According to one or more embodiments, the various optional steps may be used in conjunction with each other, and may be weighted per holiday to select the holiday audio media.

The flowchart continues at **512**, where the digital asset classification module **108** provides a representation of the set of DAs and the holiday audio media item for presentation. For example, an album of the set of DAs may be presented, such as in a photos application. In one or more embodiments, a user interface component for the holiday audio media item may be presented, or the holiday audio media item may be played as the set of DAs is presented. Optionally, at **514**, the representative DA for the holidays may be presented. For example, the representative DA may be presented as an album cover for the album of the set of DAs.

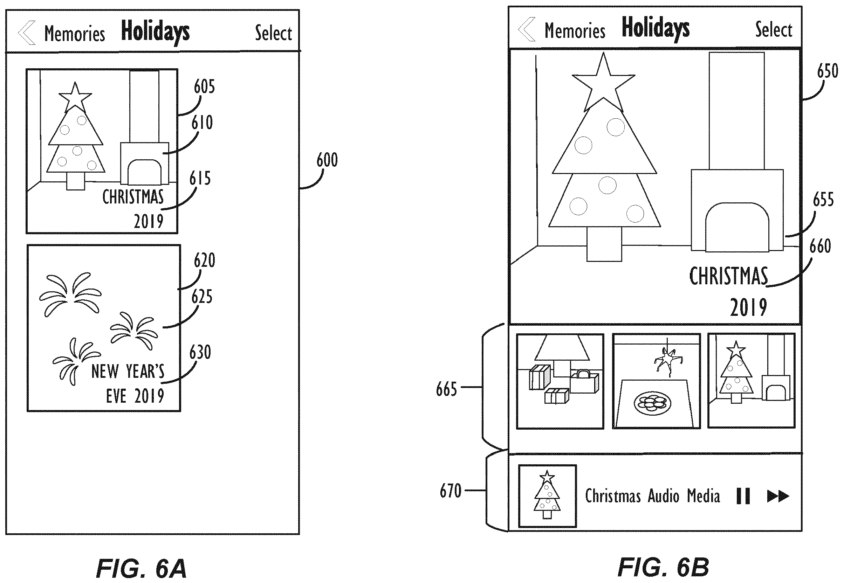

FIGS. **6A-6B** illustrate exemplary user interfaces illustrating the presentation of classified digital assets, in accordance with one or more embodiment. In the example, FIG. **6A** depicts a holiday user interface **600** including a representation for each of two sets of DAs. The first representation **605** is depicted as an album for a first asset of DAs, such has first digital asset set **402** of FIG. **4****.** As shown, the representation for the first digital asset set **605** includes a representative DA **610** and an indication of the holiday classification **615**. Similarly, second representation **620** is depicted as an album for a second asset of DAs, such as second digital asset set **404** of FIG. **4**. As shown, the representation for the second digital asset set **620** includes a representative DA **625** and an indication of the holiday classification **630**.

Turning to FIG. **6B**, an album user interface **650** is presented depicting an album for the first digital asset set **402**, represented by **605**. According to one or more embodiments, the album user interface **650** may include the representative digital media item **655**, as was used for the album cover, along with an indication of the holiday classification **660.** Further, the album user interface **650** may include thumbnails or other representatives of each of the sets of DAs **665** in the first digital asset set **402**. According to one or more embodiments, while not described above, a filtering process may be applied to DAs within the set of DAs to identify DAs in the set of DAs that are not representative of the holiday classification. In one or more embodiments, the non-representative DAs may be filtered out based on filtering criteria, such as holiday scores for the filtered DAs. As an example, the image of the coffee cup in the first digital asset set **402** may have a sufficiently low score (i.e., below a particular threshold score or below a particular number of relevant images selected by score, or the like). As such, the image of the coffee cup may not appear in the set of DAs **665** in the album user interface **650**. Further, the album user interface **650** may include an audio media interface **670** representative of a selected holiday media item presented with the digital asset set, according to one or more embodiments. The audio media interface may include, for example, a user input area to manage playback of the audio media item, and/or may include a visual representation of the selected holiday audio media item which may be played during presentation of the album of DAs.

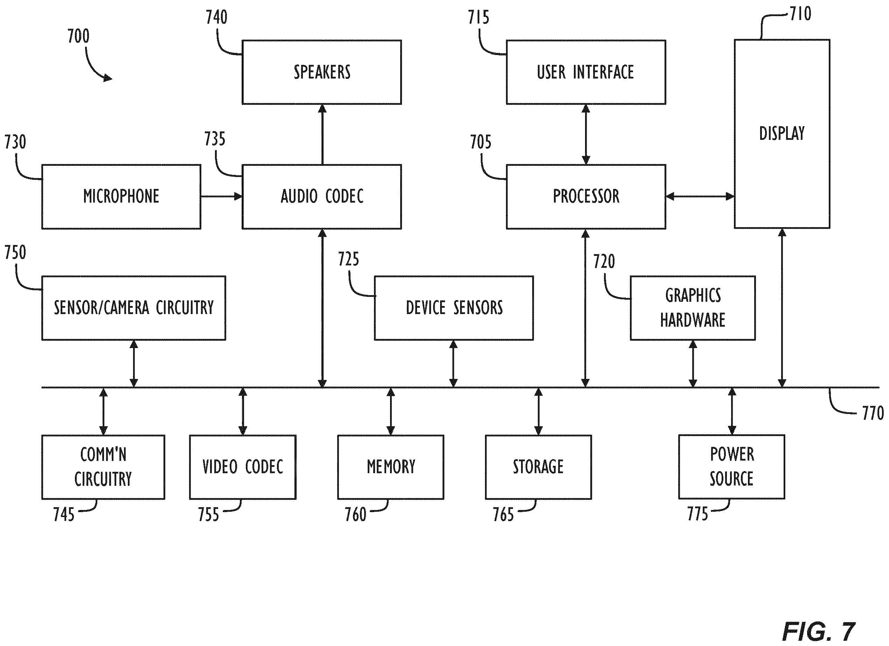

Referring now to FIG. **7**, a simplified functional block diagram of an illustrative programmable electronic device **700** for performing digital asset classification is shown, according to one embodiment. Electronic device **700** could be, for example, a mobile telephone, personal media device, portable camera, or a tablet, notebook or desktop computer system. As shown, electronic device **700** may include processor **705**, display **710**, user interface **715**, graphics hardware **720**, device sensors **725** (e.g., proximity sensor/ambient light sensor, accelerometer and/or gyroscope), microphone **730**, audio codec(s) **735**, speaker(s) **740**, communications circuitry **745**, image capture circuit or unit **750**, which may, e.g., comprise multiple camera units/optical sensors having different characteristics (as well as camera units that are housed outside of, but in electronic communication with, device **700**), video codec(s) **755**, memory **760**, storage **765**, and communications bus **770**.

Processor **705** may execute instructions necessary to carry out or control the operation of many functions performed by device **700** (*e.g.,* such as the generation and/or processing of DAs in accordance with the various embodiments described herein). Processor **705** may, for instance, drive display **710** and receive user input from user interface **715**. User interface **715** can take a variety of forms, such as a button, keypad, dial, a click wheel, keyboard, display screen and/or a touch screen. User interface **715** could, for example, be the conduit through which a user may view a captured video stream and/or indicate particular images(s) that the user would like to capture or share (e.g., by clicking on a physical or virtual button at the moment the desired image is being displayed on the device's display screen).

In one embodiment, display **710** may display a video stream as it is captured while processor **705** and/or graphics hardware **720** and/or image capture circuitry contemporaneously store the video stream (or individual image frames from the video stream) in memory **760** and/or storage **765**. Processor **705** may be a system-on-chip such as those found in mobile devices and include one or more dedicated graphics processing units (GPUs). Processor **705** may be based on reduced instruction-set computer (RISC) or complex instruction-set computer (CISC) architectures or any other suitable architecture and may include one or more processing cores. Graphics hardware **720** may be special purpose computational hardware for processing graphics and/or assisting processor **705** perform computational tasks. In one embodiment, graphics hardware **720** may include one or more programmable graphics processing units (GPUs).

Image capture circuitry **750** may comprise one or more camera units configured to capture images, e.g., images which may be managed by a DAM system, e.g., in accordance with this disclosure. Output from image capture circuitry **750** may be processed, at least in part, by video codec(s) **755** and/or processor **705** and/or graphics hardware **720**, and/or a dedicated image processing unit incorporated within circuitry **750**. Images so captured may be stored in memory **760** and/or storage **765**. Memory **760** may include one or more different types of media used by processor **705**, graphics hardware **720**, and image capture circuitry **750** to perform device functions. For example, memory **760** may include memory cache, read-only memory (ROM), and/or random access memory (RAM). Storage **765** may store media (*e*.*g*., audio, image and video files), computer program instructions or software, preference information, device profile information, and any other suitable data. Storage **765** may include one more non-transitory storage mediums including, for example, magnetic disks (fixed, floppy, and removable) and tape, optical media such as CD-ROMs and digital video disks (DVDs), and semiconductor memory devices such as Electrically Programmable Read-Only Memory (EPROM), and Electrically Erasable Programmable Read-Only Memory (EEPROM). Memory **760** and storage **765** may be used to retain computer program instructions or code organized into one or more modules and written in any desired computer programming language. When executed by, for example, processor **705**, such computer program code may implement one or more of the methods described herein. Power source **775** may comprise a rechargeable battery (e.g., a lithium-ion battery, or the like) or other electrical connection to a power supply, e.g., to a mains power source, that is used to manage and/or provide electrical power to the electronic components and associated circuitry of electronic device **700**.

In the foregoing description, numerous specific details are set forth, such as specific configurations, properties, and processes, etc., in order to provide a thorough understanding of the embodiments. In other instances, well-known processes and manufacturing techniques have not been described in particular detail in order to not unnecessarily obscure the embodiments. Reference throughout this specification to "one embodiment," "an embodiment," "another embodiment," "other embodiments," "some embodiments," and their variations means that a particular feature, structure, configuration, or characteristic described in connection with the embodiment is included in at least one embodiment. Thus, the appearances of the phrase "for one embodiment," "for an embodiment," "for another embodiment," "in other embodiments," "in some embodiments," or their variations in various places throughout this specification are not necessarily referring to the same embodiment. Furthermore, the particular features, structures, configurations, or characteristics may be combined in any suitable manner in one or more embodiments.

In the following description and claims, the terms "coupled" and "connected," along with their derivatives, may be used. It should be understood that these terms are not intended as synonyms for each other. "Coupled" is used herein to indicate that two or more elements or components, which may or may not be in direct physical or electrical contact with each other, cooperate or interact with each other. "Connected" is used to indicate the establishment of communication between two or more elements or components that are coupled with each other.

Some portions of the preceding detailed description have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing system, that manipulates and transforms data represented as physical (electronic) quantities within the computer system's registers and memories into other data similarly represented as physical quantities within the computer system memories or registers or other such information storage, transmission or display devices.

Embodiments described herein can relate to an apparatus for performing a computer program (e.g., the operations described herein, etc.). Such a computer program may be stored in a non-transitory computer readable medium. A machine-readable medium includes any mechanism for storing information in a form readable by a machine (e.g., a computer). For example, a machine-readable (e.g., computer-readable) medium includes a machine (e.g., a computer) readable storage medium (e.g., read only memory ("ROM"), random access memory ("RAM"), magnetic disk storage media, optical storage media, flash memory devices).

Although operations or methods are described above in terms of some sequential operations, it should be appreciated that some of the operations described may be performed in a different order. Moreover, some operations may be performed in parallel, rather than sequentially. Embodiments described herein are not described with reference to any particular programming language. It will be appreciated that a variety of programming languages may be used to implement the various embodiments of the disclosed subject matter. In utilizing the various aspects of the embodiments described herein, it would become apparent to one skilled in the art that combinations, modifications, or variations of the above embodiments are possible for managing components of a processing system to increase the power and performance of at least one of those components. Thus, it will be evident that various modifications may be made thereto without departing from the broader spirit and scope of at least one of the disclosed concepts set forth in the following claims. The specification and drawings are, accordingly, to be regarded in an illustrative sense, rather than a restrictive sense.

In the development of any actual implementation of one or more of the disclosed concepts (e.g., such as a software and/or hardware development project, etc.), numerous decisions must be made to achieve the developers' specific goals (e.g., compliance with system-related constraints and/or business-related constraints). These goals may vary from one implementation to another, and this variation could affect the actual implementation of one or more of the disclosed concepts set forth in the embodiments described herein. Such development efforts might be complex and time-consuming, but may still be a routine undertaking for a person having ordinary skill in the art in the design and/or implementation of one or more of the inventive concepts set forth in the embodiments described herein.

As described above, one aspect of the present technology is the gathering and use of data available from various sources to improve the delivery to users of content-related suggestions. The present disclosure contemplates that in some instances, this gathered data may include personal information data that uniquely identifies or can be used to contact or locate a specific person. Such personal information data can include demographic data, location-based data, telephone numbers, email addresses, social media handles, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to deliver targeted content-related suggestions that are of greater interest and/or greater contextual relevance to the user. Accordingly, use of such personal information data enables users to have more streamlined and meaningful control of the content that they share with others. Further, other uses for personal information data that benefit the user are also contemplated by the present disclosure. For instance, health and fitness data may be used to provide insights into a user's general wellness, or state of well-being during various moments or events in their lives.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence, different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of content-related suggestion services, the present technology can be configured to allow users to select to "opt in" or "opt out" of participation in the collection of personal information data during registration for services or anytime thereafter. In another example, users can select not to provide their content and other personal information data for improved content-related suggestion services. In yet another example, users can select to limit the length of time their personal information data is maintained by a third party, limit the length of time into the past from which content-related suggestions may be drawn, and/or entirely prohibit the development of a knowledge graph or other metadata profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health-related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be suggested for sharing to users by inferring preferences based on non-personal information data or a bare minimum amount of personal information, such as the quality level of the content (e.g., focus, exposure levels, etc.) or the fact that certain content is being requested by a device associated with a contact of the user, other non-personal information available to the DAM system, or publicly available information.

As used in the description above and the claims below, the phrases "at least one of A, B, or C" and "one or more of A, B, or C" include A alone, B alone, C alone, a combination of A and B, a combination of B and C, a combination of A and C, and a combination of A, B, and C. That is, the phrases "at least one of A, B, or C" and "one or more of A, B, or C" means A, B, C, or any combination thereof, such that one or more of a group of elements consisting of A, B and C, and should not be interpreted as requiring at least one of each of the listed elements A, B and C, regardless of whether A, B and C are related as categories or otherwise. Furthermore, the use of the article "a" or "the" in introducing an element should not be interpreted as being exclusive of a plurality of elements. Also, the recitation of "A, B, and/or C" is equal to "at least one of A, B, or C." Also, the use of "a" refers to "one or more" in the present disclosure. For example, "a DA" refers to "one DA" or "a group of DAs."

## Claims

1. A method, comprising:
accessing a first set of digital media assets;
calculating one or more holiday scores for the first set of digital media assets, wherein each of the one or more holiday scores is calculated based on one or more weighted holiday metrics determined based on characteristics of the set of digital assets, and wherein each of the one or more holiday scores corresponds to a particular holiday from among a plurality of predetermined holidays;
determining a holiday classification for the first set of digital media assets based on the one or more calculated holiday scores; and
providing the first set of digital media assets for presentation at a device, in association with the determined holiday classification.

2. The method of claim 1, wherein the one or more weighted holiday metrics comprises at least one selected from a group consisting of: a date score, a location score, and a scene score.

3. The method of claim 2, wherein the scene score is determined based, at least in part, on scene identifiers obtained by applying one or more digital media assets from the first set of digital media assets to a trained model configured to identify digital media content representative of one or more holidays of the plurality of predetermined holidays.

4. The method of claim 2, wherein the date score is determined based, at least in part, on one or more dates associated with a particular holiday of the plurality of predetermined holidays and one or more dates associated with the first set of digital media assets.

5. The method of claim 2, wherein the location score is determined based, at least in part, on one or more of: a location of capture for at least one of the digital media assets in the first set of digital media assets, a country of residency for a user of the device, and a language associated with the device.

6. The method of claim 1, wherein the holiday classification is further determined based, at least in part, on one or more personalized, holiday-related preferences specified by a user of the device.

7. The method of claim 2, further comprising: selecting a representative digital media asset for the first set of digital media assets, wherein the representative digital media asset is selected based on one or more of: a digital media content of the representative digital media asset; and the determined holiday classification for the first set of digital media assets.

8. The method of claim 1, further comprising:
accessing a second set of digital media assets;
calculating one or more second holiday scores for the second set of digital media assets, wherein each of the one or more second holiday scores is calculated based on one or more weighted holiday metrics determined based on characteristics of the second set of digital assets, and wherein each of the one or more second holiday scores corresponds to a particular holiday from among the plurality of predetermined holidays;
determining a second holiday classification for the second set of digital media assets based on the one or more second holiday scores; and
providing the second set of digital media assets for presentation at the device, in association with the second holiday classification, wherein the second holiday classification corresponds to a different holiday from the plurality of predetermined holidays than the holiday classification determined for the first set of digital media assets.

9. The method of claim 1, further comprising:
selecting, based on the holiday classification, an audio media item representative of the holiday classification, and
providing the selected audio media item for presentation at the device in association with the first set of digital media assets.

10. The method of claim 8, wherein the audio media item is selected in accordance with at least one of the one or more weighted holiday metrics.

11. The method of claim 1, further comprising: filtering one or more of the digital media assets in the first set of digital media assets out from the presentation at the device, based, at least in part, on the application of one or more filtering criteria to the digital media assets in the first set of digital media assets.

12. The method of claim 1, further comprising: determining, for one or more of the digital media assets in the first set of digital media assets, one or more holiday scores, based, at least in part, on the application of one or more filtering criteria to the one or more of the digital media assets.

13. An electronic device, comprising:
a memory; and
one or more processors operatively coupled to the memory, wherein the one or more processors are configured to execute instructions causing the one or more processors to carry out the method of any of claims 1 to 9.

14. A non-transitory computer readable medium comprising computer readable code executable by one or more processors to carry out the method of any of claims 1 to 12.

15. A system comprising:
one or more processors; and
one or more computer readable media comprising computer readable code executable by the one or more processors to carry out the method of any of claims 1 to 12.
